# EUROPEAN PATENT APPLICATION

(11) **EP 4 312 355 A1**
(43) Date of publication of application: **31.01.2024**
(21) Application number: 22187510.7
(22) Date of filing: 28.07.2022
(51) Int. Cl.: H02M 1/00, H02M 7/487

(54) **HYDROGEN PRODUCTION SYSTEM**

(71) Applicant: ABB SCHWEIZ AG, 5400 Baden (CH)
(72) Inventor: ABDELHAKIM, Ahmed, Västerås (SE); CHEN, Cathy Yao, Västerås (SE); CANALES, Francisco, Baden-Dättwil (CH); POSTIGLIONE, Cicero, Västerås (SE)
(74) Representative: Kransell & Wennborg KB

(57) **Abstract**

A hydrogen production system (1) comprising: a first renewable power source (3-1), a first electrolyser (7-1), and a single stage power converter (5) having an input side (5a) and an output side (5b), wherein the input side (5a) is connected to the first renewable power source (3-1) and the output side (5b) is connected to the first electrolyser (7-1).

## Description

### TECHNICAL FIELD

The present disclosure generally relates to hydrogen production systems.

### BACKGROUND

Hydrogen economy has become an increasingly popular topic. There is a consensus that green hydrogen production is the only way to enable such economy to prosper. Today, approximately 95% of the hydrogen production is classified as grey, meaning it comes directly from fossil fuel origin and it is a carbon dioxide (CO₂) intensive activity. Blue hydrogen is the addition of carbon storage to the current way of production, substantially reducing the CO2 footprint. However, green hydrogen produced by electrolysis with energy from renewable sources is the only way to produce hydrogen sustainably.

In order to meet the demand for hydrogen, large-scale electrolyser plants are planned for deployment in the near future.

The conventional ways of integrating renewables with the power grid and electrolysers usually require a relatively large physical footprint.

### SUMMARY

In view of the above, a general object of the present disclosure is to provide a hydrogen production system which solves or at least mitigates problems of the prior art.

There is hence provided a hydrogen production system comprising: a first renewable power source, a first electrolyser, and a single stage power converter having an input side and an output side, wherein the input side is connected to the first renewable power source and the output side is connected to the first electrolyser.

The single stage power converter is compact and requires less material for connecting renewable energy sources with electrolysers.

The output side of the single stage power converter is a DC side.

According to one embodiment the single stage power converter is a multi-level converter.

The multi-level converter has at least 2 levels, such as at least 3 levels.

According to one embodiment the output side comprises a positive voltage terminal, a neutral terminal, and a negative voltage terminal. The single stage power converter may thus be at least a 3-level converter.

According to one embodiment the electrolyser is connected to the positive voltage terminal and to the negative voltage terminal.

The electrolyser may have a positive terminal connected to the positive voltage terminal and a negative terminal connected to the negative voltage terminal.

According to one embodiment the hydrogen production system comprises a second electrolyser, wherein the first electrolyser is connected to the positive voltage terminal and to the neutral terminal, and wherein the second electrolyser is connected to the neutral terminal and to the negative voltage terminal.

According to one embodiment the multi-level converter comprises a three-level active neutral point clamped, ANPC, converter.

According to one embodiment the multi-level converter comprises a multi-port hybrid NPC converter.

According to one embodiment the multi-port hybrid NPC converter has a first grid side terminal connected to a power grid.

The multi-port hybrid NPC is thus connected to the grid in addition to the first renewable power source.

According to one embodiment the first renewable power source is configured to generate a three-phase alternating current, wherein a third leg of the three legs forms a second grid side terminal connected to the power grid.

According to one embodiment wherein the first leg is a middle leg with respect to the second leg and the third leg.

One embodiment comprises a second renewable power source, wherein the first and the second renewable power sources are configured to generate direct current, wherein a third leg of the three legs is connected to the second renewable power source, and wherein the second leg is a middle leg with respect to the first leg and the third leg.

According to one embodiment the first leg and the third leg are provided with a respective one of a first diode and a second diode.

According to one embodiment the first diode has its cathode side connected to the first renewable power source, and the second diode has its anode side connected to the second renewable power source.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1. schematically shows a block diagram of a hydrogen production system;
Fig. 2 schematically shows an example of a hydrogen production system comprising a plurality of power converters and electrolysers connected via a DC bus;
Fig. 3 is an example of a single stage power converter with renewable power source and electrolyser connections;
Figs 4-5 show examples of a single stage power converter with renewable power source and electrolyser connections;
Fig. 6 depicts an example of a single stage power converter with renewable power source and electrolyser connections;
Fig. 7 depicts an example of a single stage power converter with renewable power source, electrolyser, and grid connections;
Fig. 8 depicts another example of a single stage power converter with renewable power source, electrolyser, and grid connections; and
Fig. 9 shows yet another example of a single stage power converter with renewable power source, electrolyser, and grid connections;

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

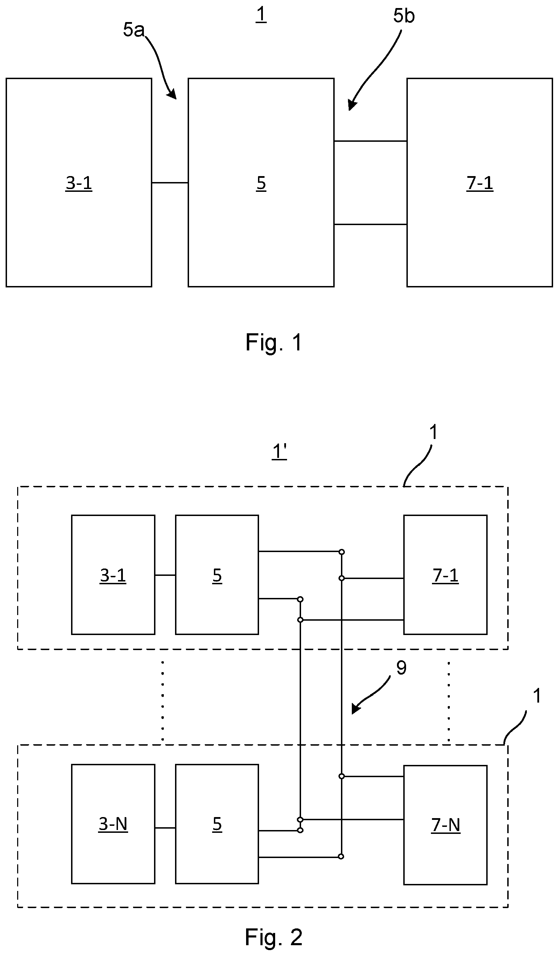

Fig. 1 show an example of a hydrogen production system 1. The hydrogen production system 1 comprises a first renewable power source 3-1, a single stage power converter 5, and a first electrolyser 7-1.

The first renewable power source 3-1 may be an AC power source such as a wind turbine or a wind farm. The AC power source may be a multi-phase, such as a three-phase, AC power source. Alternatively, the first renewable power source may be a DC power source such as a photovoltaic power source.

The single stage power converter 5 is a multi-level converter. In particular, the single stage power converter 5 is an n level converter, where n is an integer at least equal to 2. For example, n could be 2, 3, 4, or 5 and so on.

The single stage power converter 5 has an input side 5a connected to the first renewable power source 3-1.

The input side 5a is an AC side if the renewable power source 3-1 is an AC power source.

The input side 5b is a DC side if the first renewable power source 3-1 is a DC power source.

The single stage power converter 5 has an output side 5b connected to the first electrolyser 7-1. The output side 5b is a DC side configured to power the first electrolyser 7-1.

The single stage power converter 5 comprises a rectifier if the first renewable power source 3-1 is an AC power source. The single stage power converter 5 comprises a DC/DC converter if the first renewable power source is a DC power source.

The single stage power converter 5 may comprise a plurality of controllable switches for controlling the power flow between the input side 5a and the output side 5b. The switches may for example be transistors, such as insulated gate bipolar transistors (IGBT) or metal-oxide semiconductor field-effect transistors (MOS-FET).

The hydrogen production system 1 may comprise a control system (not shown) configured to control the switches of the single stage power converter 5.

Fig. 2 shows an example of a hydrogen production system 1' comprising N hydrogen production systems 1, where N is an integer equal to or larger than 2. The input side 5a of each of the N single stage power converters 5 is connected to a respective renewable power source 3-1 to 3-N. The output side 5b of each of the N single stage power converters 5 is connected to a common DC bus 9 to which the N electrolysers 7-1 to 7-N are connected. The DC bus 9 may be a low voltage or medium voltage DC bus. By means of this design, better flexibility can be provided to match the power and the voltage ratings of the electrolysers 7-1 to 7-N. Moreover, higher robustness is obtained in case of failure or maintenance.

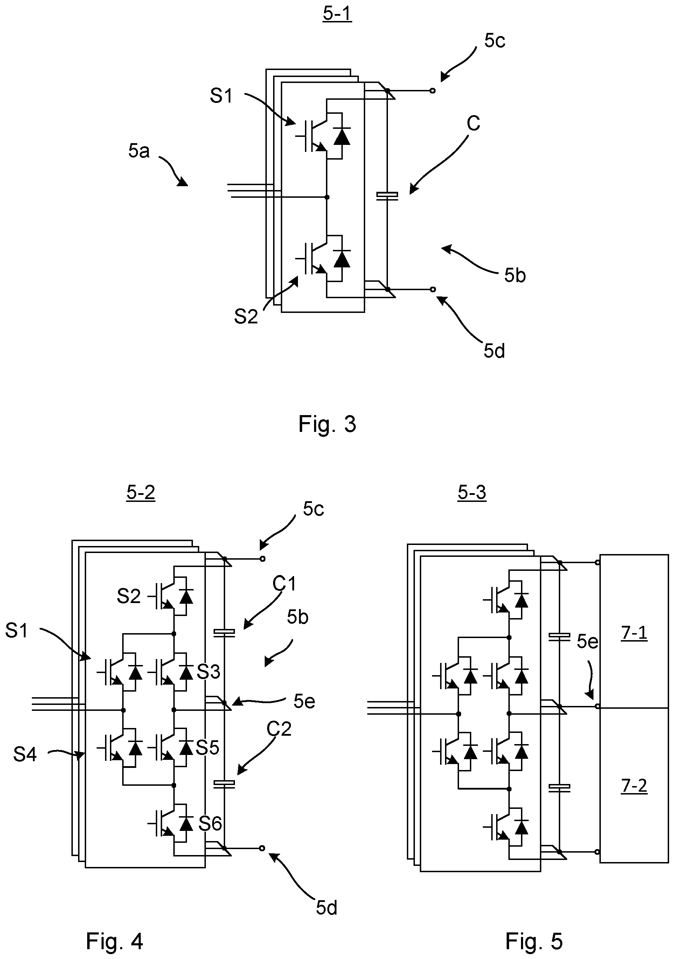

Fig. 3 shows a first example of the general single stage power converter 5 depicted in Figs 1-2 when the first renewable power source 3-1 is an AC power source. The depicted single stage power converter 5-1 is a rectifier.

According to the example in Fig. 3, the single stage power converter 5-1 comprises a half bridge for each electric phase. The exemplified single stage power converter 5-1 comprises three half bridges. Each half bridge comprises two switches S1 and S2 connected to each other, and a capacitor C on the output side 5b, connected across the switches S1 and S2.

The first electrolyser 7-1 is according to the example connected to the DC link formed by the capacitor C on the output side 5b. The single stage power converter 5-1 has a positive voltage terminal 5c and a negative voltage terminal 5d and the capacitor C connected to the positive voltage terminal 5c and to the negative voltage terminal 5d. The first electrolyser 7-1 is connected to the positive voltage terminal 5c and to the negative voltage terminal 5d.

Fig. 4 shows another example of the general single stage power converter 5 in Figs 1-2 when the first renewable power source 3-1 is an AC power source. The single stage power converter 5-2 of Fig. 4 comprises a three-level active neutral point clamped, ANPC, converter for each electric phase. The exemplified single stage power converter 5-2 comprises three ANPC converters. Each ANPC converter comprises a plurality of switches S1-S5, and two series-connected capacitors C1 and C2 at the output side 5b. The ANPC converter has a positive voltage terminal 5c, a negative voltage terminal 5d, and a neutral terminal 5e formed by a connection point between the two capacitors C1 and C2. The ANPC converter of Fig. 4 generates two DC voltages at its output side, namely a voltage with absolute value V/2 between the positive voltage terminal 5c and the neutral terminal 5e, and a voltage with absolute value V/2 between the neutral terminal 5e and the negative voltage terminal 5d.

The first electrolyser 7-1 is according to the example connected to the positive voltage terminal 5c and to the negative voltage terminal 5d.

Fig. 5 shows a single stage power converter 5-3 which is a variation of the ANPC converter of Fig. 4. In particular, single stage power converter 5-3 is identical to the single stage power converter 5-2. However, according to the example in Fig. 5, the hydrogen production system comprises a second electrolyser 7-2. The first electrolyser 7-1 is connected to the positive voltage terminal 5d and to the neutral terminal 5e. The second electrolyser 7-2 is connected to the neutral terminal 5e and to the negative voltage terminal 5d.

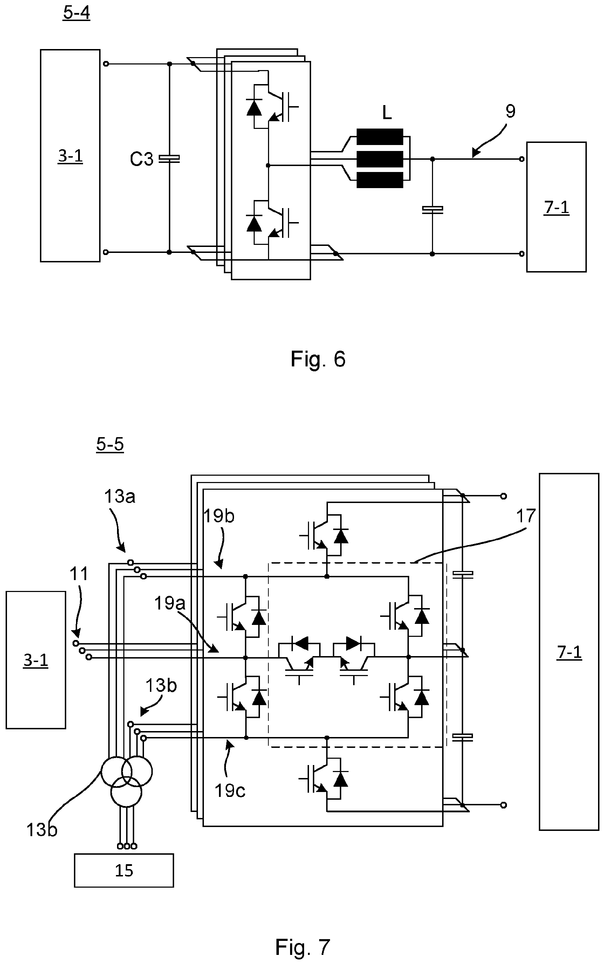

Fig, 6 shows another example of the general single stage power converter 5 in Figs 1-2 when the first renewable power source 3-1 is a DC power source. The single stage power converter 5-4 of Fig. 6 has an interleaved buck converter topology. The single stage power converter 5-4 has a capacitor C3 connected across its two input terminals on the input side. The single stage power converter 5-4 may comprise for example three parallel-connected buck converters forming the interleaved buck converter topology, each being connected to the two input terminals. Moreover, the single stage power converter 5-4 comprises inductors L, each being connected to a respective one of the buck converters and to a DC link 9 on the output side of the single stage power converter 5-4. The first electrolyser 7-1 is connected to the DC link 9.

Fig. 7 shows another example of the general single stage power converter 5 in Figs 1-2 when the first renewable power source 3-1 is an AC power source. The single stage power converter 5-5 comprises a multi-port hybrid NPC converter, i.e., a multi-port hybrid neutral point clamped converter. The exemplified single stage power converter 5-5 comprises three multi-port hybrid NPC converters, connected to a respective electric phase. In particular, the single stage power converter 5-5 comprises AC inputs 11 configured to be connected to a respective phase of an AC power source.

Each multi-port hybrid NPC converter has a first grid side terminal 13a and a second grid side terminal 13b connected to a power grid 15. Thus, the single stage power converter 5-5 outputs in total six electric phases. A transformer system may be provided to convert the six electric phases to three electric phases before connecting with the power grid 15.

In the example in Fig. 7, each multi-port hybrid neutral point clamped converter comprises a T-type converter 17 having three legs 19a-19c. A first leg 19a of the three legs is a middle leg connected to the first renewable power source 3-1. A second leg 19b is an upper leg with respect to the first leg 19a. The second leg 19b forms the first grid side terminal 13a connected to the power grid 15. A third leg 19c is a lower leg with respect to the first leg 19a in the circuit diagram shown in Fig. 7. The third leg 19c forms the second grid side terminal 13b.

Each multi-port hybrid NPC converter comprises two half bridges connected to the T-type converter 17. A first of these half bridges is formed by the upper two switches not forming part of the T-type converter 17, and a second of these half bridges is formed by the lower two switches not forming part of the T-type converter 17.

One or more electrolysers 7-1 may be connected to the output side of the single stage power converter 5-5, in the same manner as described in Figs 4-5.

The single stage power converter 5-5 enables directing power from the first renewable power source 3-1 to the one or more electrolysers 7-1 and to the power grid 15.

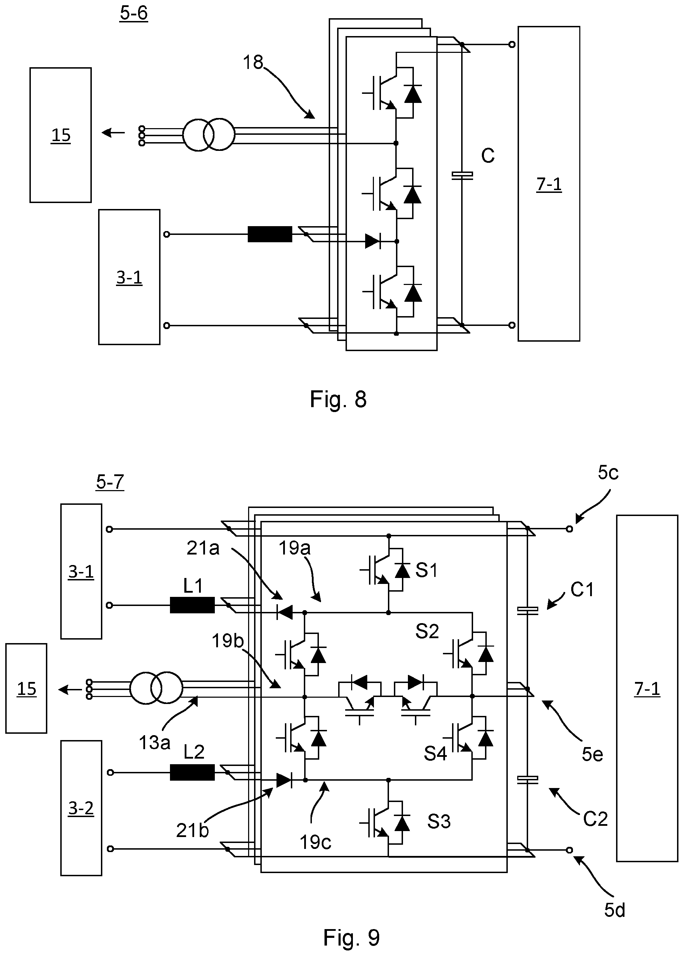

Fig. 8 shows another example of the general single stage power converter 5 in Figs 1-2 when the first renewable power source 3-1 is DC power source.

The single stage power converter 5-6 of Fig. 8 is a nine-switch split-source inverter. The single stage power converter 5-6 has first legs 19a and second legs 19b connected to a first renewable power source 3-1. The single stage power converter 5-6 has legs 18 connected to a power grid 15. The first electrolyser 7-1 is connected across a capacitor C on the output side of the single stage power converter 5-6.

Fig. 9 shows yet another example of the general single stage power converter 5 in Figs 1-2.

In addition to the first renewable power source 3-1, a second renewable power source 3-2 can be connected to the single stage power converter 5-7. The first renewable power source 3-1 and the second renewable power source 3-2 are configured to generate direct current. The first renewable power source 3-1 and the second renewable power source 3-2 are thus DC power sources.

The single stage power converter 5-7 comprises three multi-port hybrid NPC converters, each connected to a respective electric phase of the power grid 15. The topology is similar to the example shown in Fig. 7. However, the first leg 19a, connected to the first renewable power source 3-1, is an upper leg, the second leg 19b, which forms a first grid side terminal 13a, is a middle leg and is connected to the power grid 15, and a third leg 19c of the three legs of the T-type converter is a lower leg connected to the second renewable power source 3-2.

The single stage power converter 5-7 comprises a first diode 21a and a second diode 21b. The first leg 19a is provided with the first diode 21a. The second leg 19b is provided with the second diode 21b.

The first diode 21a has its cathode side connected to the first renewable power source 3-1. The second diode 21b has its anode side connected to the second renewable power source 3-2.

The single stage power converter 5-7 has a positive voltage terminal 5c and a negative voltage terminal 5d at its output side. The single stage power converter 5-7 also has a neutral terminal 5e. Further, the single stage power converter 5-7 comprises a two capacitors C1 and C2. A first capacitor C1 of the two capacitors C1 and C2 is connected between the positive voltage terminal 5c and the neutral terminal 5e and a second capacitor C2 of the two capacitors C1 and C2 is connected between the negative voltage terminal 5d and the neutral terminal 5e.

The first renewable power source 3-1 is modulated through the two switches S1 and S2 across the first capacitor C1 and an inductor L1 connected to the cathode side of the first diode 21a, along with the first diode 21a, and the diodes of the two switches S1 and S2. The voltage across the first capacitor C1 can be controlled or the current from the first renewable power source 3-1 can be controlled.

The second renewable power source 3-2 is modulated through the two switches S3 and S4 across the second capacitor C2 and an inductor L2 connected to the anode side of the second diode 21b, along with the second diode 21b, and the diodes of the two switches S3 and S4. The voltage across the second capacitor C2 can be controlled or the current from the second renewable power source 3-2 can be controlled.

A first electrolyser 7-1 may be connected to the positive voltage terminal 5c and to the negative voltage terminal 5d. Alternatively, two electrolysers 7-1 may be connected to the output side of the single stage power converter 5-7, in the same way as shown in the example in Fig. 5.

The power flow can be controlled through the controlled current in the first and second renewable power sources 3-1 and 3-2, and the power grid 15, along with controlling the DC link voltage, i.e., the voltage across the two capacitors C1 and C2.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A hydrogen production system (1, 1') comprising:
a first renewable power source (3-1),
a first electrolyser (7-1), and
a single stage power converter (5; 5-1, 5-2; 5-3; 5-4; 5-5; 5-6; 5-7) having an input side (5a) and an output side (5b),
wherein the input side (5a) is connected to the first renewable power source (3-1) and the output side (5b) is connected to the first electrolyser (7-1).

2. The hydrogen production system (1, 1') as claimed 1, wherein the single stage power converter (5; 5-1, 5-2; 5-3; 5-4; 5-5; 5-6; 5-7) is a multi-level converter.

3. The hydrogen production system (1, 1') as claimed in claim 2, wherein the output side (5b) comprises a positive voltage terminal (5c), a neutral terminal (5e), and a negative voltage terminal (5d).

4. The hydrogen production system (1, 1') as claimed in claim 3, wherein the first electrolyser (7-1) is connected to the positive voltage terminal (5c) and to the negative voltage terminal (5d).

5. The hydrogen production system (1, 1') as claimed in claim 3, wherein the hydrogen production system comprises a second electrolyser (7-2), wherein the first electrolyser (7-1) is connected to the positive voltage terminal(5c) and to the neutral terminal (5e), and wherein the second electrolyser (7-2) is connected to the neutral terminal (5e) and to the negative voltage terminal (5d).

6. The hydrogen production system (1, 1') as claimed in any of claims 2-5, wherein the multi-level converter comprises a three-level active neutral point clamped, ANPC, converter.

7. The hydrogen production system (1, 1') as claimed in any of claims 2-5, wherein the multi-level converter comprises a multi-port hybrid NPC converter.

8. The hydrogen production system (1, 1') as claimed in claim 7, wherein the multi-port hybrid NPC converter has a first grid side terminal (13a) connected to a power grid (15).

9. The hydrogen production system (1, 1') as claimed in claim 7 or 8, wherein the multi-port hybrid NPC converter comprises a T-type converter (17) having three legs (19a-19c), wherein a first leg (19a) of the three legs is connected to the first renewable power source (3-1), and a second leg (19b) of the three legs forms the first grid side terminal (13a).

10. The hydrogen production system (1, 1') as claimed in claim 9, wherein the first renewable power source (3-1) is configured to generate a three-phase alternating current, wherein a third leg (19c) of the three legs forms a second grid side terminal (13b) connected to the power grid (15).

11. The hydrogen production system (1, 1') as claimed in claim 10, wherein the first leg (19a) is a middle leg with respect to the second leg (19b) and the third leg (19c).

12. The hydrogen production system (1, 1') as claimed in claim 9, comprising a second renewable power source (3-2), wherein the first and the second renewable power sources (3-1, 3-2) are configured to generate direct current, wherein a third leg (19c) of the three legs is connected to the second renewable power source (3-2), and wherein the second leg (19b) is a middle leg with respect to the first leg (19a) and the third leg (19c).

13. The hydrogen production system (1, 1') as claimed in claim 12, wherein the first leg (19a) and the third leg (19c) are provided with a respective one of a first diode (21a) and a second diode (21b).

14. The hydrogen production system (1, 1') as claimed in claim 13, wherein the first diode (21a) has its cathode side connected to the first renewable power source (3-1), and the second diode (21b) has its anode side connected to the second renewable power source (3-2).
